Europäisches Patentamt

European Patent Office

Office européen des brevets

(19)

(11) Veröffentlichungsnummer: **0 029 208**
**A1**

(12) # EUROPÄISCHE PATENTANMELDUNG

(21) Anmeldenummer: 80106971.7

(22) Anmeldetag: 12.11.80

(51) Int. Cl.³: **B 60 P 1/64**

(30) Priorität: 15.11.79 DE 2946060

(71) Anmelder: **Klaus, Kaspar, Dr.-Berndl-Strasse 5,
D-8940 Memmingen (DE)**

(43) Veröffentlichungstag der Anmeldung: **27.05.81
Patentblatt 81/21**

(72) Erfinder: **Klaus, Kaspar, Dr.-Berndl-Strasse 5,
D-8940 Memmingen (DE)**

(84) Benannte Vertragsstaaten: **AT BE CH FR GB IT LI LU NL
SE**

(74) Vertreter: **Pfister, Helmut, Dipl.-Ing., Buxacher Strasse 9,
D-8940 Memmingen/Bayern (DE)**

(54) **Strassentransportfahrzeug zum Transport von Containern.**

(57) Das Strassentransportfahrzeug (22) dient zum Transport von Containern oder dgl. und besitzt vor und hinter der Last (3) am Fahrzeug (22) je ein Ladegerät (5, 6) mit einem verschwenkbaren Arm, an dem die Last (3) aufhängbar ist und je einen Stützfuss (7, 8) zur Abstützung am Erdboden während des Ladevorgangs, wobei das Ladegerät (5, 6) und der Stützfuss (7, 8) an einem gemeinsamen Gestell (1, 2) gelagert sind. Das Gestell (1) am vorderen Ende der Last (3) ist dabei im wesentlichen oberhalb der Lastauflagefläche (4) und das Gestell (2) am hinteren Ende der Last (3) im wesentlichen unter der Lastauflagefläche (4) angeordnet. Das Ladegerät (5, 6) und auch der Stützfuss (7, 8) sind nach oben und seitlich vom Gestell wegbewegbar, wodurch erreicht wird, dass gleiche oder fast gleiche Gestelle (1, 2), Stützfüsse (7, 8) und Ladegeräte (5, 6) am vorderen und rückwärtigen Ende der Last (3), aber auch bei verschiedenen Fahrzeugen einsetzbar sind.

ACTORUM AG

Patentanwalt

Dipl.-Ing. **HELMUT PFISTER**

Postscheckkonto München Nr. 1343 39-805
Bankkonto: Bayerische Vereinsbank Memmingen

**D-894 MEMMINGEN/BAYERN**
Buxacherstraße 9
Telefon (0 83 31) 31 83

0029208

1 2. Nov. 1980

Herrn Ing. Kaspar Klaus, Dr.-Berndl-Str. 5
8940 Memmigen

---

Straßentransportfahrzeug zum Transport von Containern

---

Die Erfindung betrifft ein Straßentransportfahrzeug insbesondere einen Sattelauflieger zum Transport von Containern, Wechselaufbauten oder dergleichen mit einer Ladeeinrichtung zum Auf- und Abladen der Last, bestehend aus je einem vor und hinter der Last am Fahrzeug gelagerten Ladegerät mit einem verschwenkbaren Arm, an dem die Last aufhängbar ist und einem Stützfuß zur Abstützung am Erdboden während des Ladevorgangs, wobei das Ladegerät und der Stützfuß an einem gemeinsamen Gestell gelagert sind.

- 2 -

0029208

Straßentransportfahrzeuge der vorbeschriebenen Art sind bekannt. Sie dienen dazu, die Last also insbesondere den Container bzw. einen Wechselaufbau in einem einzigen Arbeitsgang auf das Fahrzeug aufladen und vom Fahrzeug abnehmen zu können, wobei die Ladeeinrichtung Teil des Fahrzeuges ist, also an jedem Standort des Fahrzeuges zur Verfügung steht. Die Stützfüße sollen die Standsicherheit des Fahrzeuges verbessern und eine Ladearbeit auch bei verhältnismäßig schweren Lasten ermöglichen. Die Zusammenfassung des Ladegerätes und des Stützfußes je in einem Gestell vor und hinter der Last soll dabei die Montage der Ladeeinrichtung an einem Lastfahrzeug erleichtern und außerdem die bei dem Ladevorgang auftretenden Kräfte im Ladegerät unmittelbar in den Stützfuß überleiten ohne den Fahrzeugrahmen zu überlasten.

Obwohl Ladeeinrichtungen bzw. Gestelle der vorerwähnten Art an verschiedene Typen von Lastfahrzeugen, insbesondere von Sattelaufliegern anbaubar sein sollen, ist es doch erwünscht, alle angewandten Teile möglichst gleichartig auszubilden um einerseits die Herstellung zu vereinfachen und um andererseits auch eine leichte Austauschmöglichkeit zu erreichen. Der Vereinheitlichung der Ladeeinrichtungen der Stützfüße und Gestelle steht nun aber entgegen, daß das Ladegerät bzw. das Gestell und der Stützfuß vor und hinter dem Fahrzeug jeweils unterschiedliche Bedingungen erfüllen muß.

Das Ladegerät bzw. das Gestell oder der Stützfuß das auf dem Sattelauflieger vor der Last angeordnet wird, muß darauf Rücksicht nehmen, daß sich unter dem Sattelauflieger der Sattelschlepper befindet und daß daher keine Teile in den Bewegungsbereich des Sattelschleppers ragen können. Es ist zwar versucht worden, das Problem dadurch zu umgehen, daß das vordere Ladegerät erst an einer Stelle des Sattelaufliegers angeordnet wird, der hinter dem Sattelschlepper liegt.

0029208

Dies verkürzt aber erheblich die zur Verfügung stehende Ladefläche des Sattelaufliegers.

Am rückwärtigen Ende des Fahrzeuges sollte es dagegen möglich sein, daß eine rückwärtige Tür am Container auch im aufgeladenen Zustand des Containers zu öffnen ist. Dieses Öffnen darf nicht behindert werden durch Teile des Gestells, der Stützfüße oder des Ladegeräts.

Durch die Erfindung soll ein Straßentransportfahrzeug der eingangs beschriebenen Art dahingehend weiterverbessert werden, daß eine Anordnung getroffen wird, die die Verwendung weithend gleicher Teile bei verschiedenen Fahrzeugtypen und auch am vorderen und hinteren Lastende zuläßt. Zur Lösung dieser Aufgabe schlägt die Erfindung vor, daß das eine Gestell am vorderen Ende der Last im wesentlichen oberhalb der Lastauflagefläche und das andere Gestell am hinteren Ende der Last im wesentlichen unter der Lastauflagefläche angeordnet ist und daß sowohl das Ladegerät als auch der Stützfuß nach oben und seitlich vom Gestell wegbewegbar sind.

Bei der Erfindung haben die Gestelle eine unterschiedliche Höhenlage. Das Gestell am vorderen Ende der Last ist etwa um die Bauhöhe des Gestells und der zugehörigen Teile höher angeordnet, als das Gestell am hinteren Ende der Last. Es ist jedoch gefunden worden, daß die unterschiedliche Höhenanordnung keinen oder nur einen sehr geringen Nachteil in sich schließt. Das Arbeiten mit der Ladeeinrichtung wird hierdurch nicht erschwert.

Von wesentlichem Vorteil ist bei der Erfindung, daß zwei im wesentlichen identische Gestelle mit gleichen Ladegeräten und Stützfüßen benützt werden können. Die Gestelle können dabei völlig identisch sein. Fast der gleiche Vorteil wird aber auch schon erhalten, wenn die Gestelle zueinander symmetrisch sind.

Da sich bei der Erfindung der Stützfuß nach oben und seitlich vom Gestell wegbewegt, kann die gleiche Stützfußkonstruktion auch am vorderen Ende der Last angewandt werden, da es auf die spezielle Bauweise des Sattelaufliegers oder -schleppers nicht ankommt.

Die Verbindung des Gestells mit dem Fahrzeugrahmen bereitet bei der Erfindung keine Schwierigkeiten. Mittels des Gestells ist es ohne weiteres möglich, das Gestell an das hintere Ende des Rahmens anzusetzen oder am vorderen Ende auf den Rahmen aufzusetzen.

Wenn im Zusammenhang mit der Erfindung davon die Rede ist, daß das Gestell mit den zugehörigen Teilen am vorderen Ende der Last im wesentlichen oberhalb der Lastauflagefläche anzuordnen ist, so schließt dies doch nicht aus, daß einige Teile etwas tiefer angeordnet werden, wenn dadurch nicht in den Bewegungsbereich des Sattelschleppers eingedrungen wird.

Die unterschiedliche Höhenlage der beiden Ladegeräte kann durch verschiedene Mittel ausgeglichen werden. Die Erfindung bevorzugt dabei unterschiedlich lange Verbindungsmittel zum Beispiel Gehänge zwischen der Last und dem Laustaufhängepunkt am Ladegerät. Da in der Regel ein Container ohnehin durch Seilzüge, Ketten oder ähnliche Mittel mit dem Ladegerät zu verbinden ist, kann durch eine entsprechende Bemessung dieser Seilzüge oder Ketten eine völlig gleichartige Bewegung der Ladegeräte beim Auf- und Abladen der Last angewandt werden.

Es empfiehlt sich, daß Gestell derart auszubilden, daß es mindestens die wesentlichen Teile des Ladegeräts und des Stützfußes umschließt. Dabei ist es günstig, wenn Ladegerät und Stützfuß nebeneinander im Gestell untergebracht sind.

In besonderen Fällen kann sich ergeben, daß am Ladegerät oder auch am Stützfuß Teile nach oben vorstehen und diese Teile während des Transportes in den Bereich des Lastumrisses der Last hineinragen. In diesem Fall empfiehlt es sich, die Teile derartig auszubilden, daß sie für die Zugänglichkeit der Türe am Container seitlich aus dem Bereich des Lastumrisses wegbewegbar sind. Wenn diese Teile während des Transportes die Tür versperren, ist dies ohne Nachteil.

Es ist klar, daß es für die Erfindung von Vorteil ist, wenn die Bauhöhe des Gestells mit den zugehörigen Einrichtungen ein gewisses Maß nicht unterschreitet. Für das Gestell am vorderen Ende der Last stände an sich genügend Raum in der Höhe zur Verfügung. Das Gestell am hinteren Ende der Last muß jedoch noch eine ausreichende Bodenfreiheit einhalten.

Es ist gefunden worden, daß sich eine niedrige, jedoch sehr stabile Bauweise dadurch erhalten läßt, wenn das Gestell nach oben offene, U-förmige Aufnahmetaschen für das Ladegerät und den Stützfuß aufweist. Dabei können die Aufnahmetaschen gleich sein. Die eine Tasche nimmt das Gestell auf und die andere Tasche den Stützfuß.

Weiter schlägt die Erfindung vor, daß in der Transportstellung das Ladegerät und der Stützfuß jeweils oberhalb des zugehörigen Arbeitszylinders, der das Ladegerät oder den Stützfuß antreibt, angeordnet sind. Der Hauptteil des Ladegerätes sowie der Stützfuß haben daher eine Länge, die ungefähr der Fahrzeugbreite entspricht. In beiden Fällen sind in der Regel teleskopierbare bzw. verschwenkbare Teilstücke, Ausleger oder dergleichen vorgesehen, sodaß die erforderliche Arbeitslänge erhalten werden kann.

Insbesondere schlägt die Erfindung vor, daß das Ladegerät und der Stützfuß um ein Schwenkgelenk an der gleichen Fahrzeugseite bewegbar sind und der zugehörige Arbeitszylinder jeweils an derjenigen Stelle am Ladegerät bzw. Stützfuß angreift, die in der Transportstellung der gegenüberliegenden Fahrzeugseite benachbart sind.

Die beschrieben Anordnung des Stützfußes und des Ladegeräts im Gestell bringt den entscheidenden Vorteil mit sich, daß die Abstützpunkte bzw. Gelenkpunkte des Ladegeräts und des Stützfußes am Gestell entweder deckungsgleich übereinstimmen, sodaß sie durch je einen durchgehenden Bolzen gebildet werden können oder daß sie doch wenigstens einander benachbart sind, sodaß dann bei der Belastung nur sehr kleine Hebelarme entstehen. Dies verbessert beträchtlich die Ableitung der Kräfte vom Ladegerät in den Stützfuß und zwar auch dann, wenn Ladegerät und Stützfuß nicht in einer Vertikalebene angeordnet sind, sondern zueinander versetzt untergebracht werden, wobei im allgemeinen das Ladegerät der Last jeweils näher ist als der Stützfuß.

Bei einer bevorzugten Ausführungsform der Erfindung weist der Schwenkarm des Ladegeräts einen teleskopierbaren Ausleger auf und der Lastaufhängepunkt ist an einem rechtwinklig abgebogenen Teil des Auslegers angeordnet. Dieser Auslegeteil ist in der Regel steif mit dem übrigen, teleskopierbaren Teil verbunden. Er könnte aber auch als Hilfsschwenkarm ausgebildet sein.

Wird bei der Erfindung ein Spreader angewandt, so ist es günstig, wenn dieser am Ausleger fixierbar ist derart, daß der Spreader ohne Last mit dem Schwenkarm verschwenkbar ist. Auf diese Weise ist es möglich, den Spreader in eine Stellung zu bringen, in der er das Öffnen der Containertür am rückwärtigen Ende des Fahrzeuges nicht behindert.

0029208

In der Zeichnung sind einige Ausführungsbeispiele der Erfindung schematisch dargestellt. Es zeigen:

Fig. 1     Eine Seitenansicht eines erfindungsgemäßen Straßentransportfahrzeuges in der Transportstellung,

Fig. 2     eine der Darstellungen der Fig. 1 entsprechenden Darstellung eines Transportfahrzeuges mit einem Spraeder in der Ladestellung,

Fig. 3     eine Rückansicht eines erfindungsgemäßen Straßentransportfahrzeuges mit dem Gestell hinter der Last und dem ausgefahrenen Stützfuß, in einem anderen Maßstab,

Fig. 4     eine der Darstellung der Fig. 3 entsprechenden Darstellung des Gestells das vor der Last angeordnet ist, mit ausgefahrenem Stützfuß,

Fig. 5     eine vergrößerte Seitenansicht einer Einzelheit der Erfindung,

Fig. 6 und 7     den Darstellungen der Fig. 3 und 4 entsprechende Darstellungen der jeweiligen am Gestell gelagerten Ladegeräte bzw. deren Arbeitsbereich,

Fig. 8     eine Rückansicht des erfindungsgemäßen Fahrzeuges während des Ladevorganges eines Wechselaufbaus,

Fig. 9     eine der Darstellung der Fig. 8 entsprechende Darstellung eines Fahrzeuges mit einem Spreader,

- 8 -

Fig. 10          eine Darstellung eines anderen Anwendungsbeispiels der Erfindung und

Fig. 11 und 12   Rückansichten und Seitenansichten der Befestigung eines Gehänges am Lastaufhängepunkt.

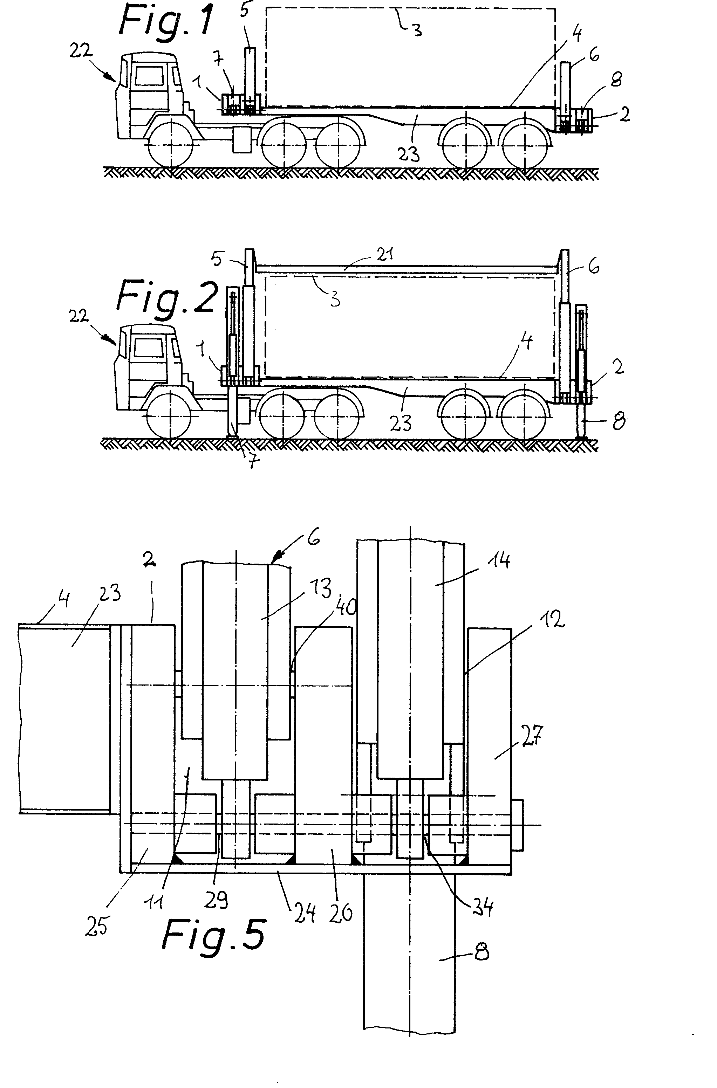

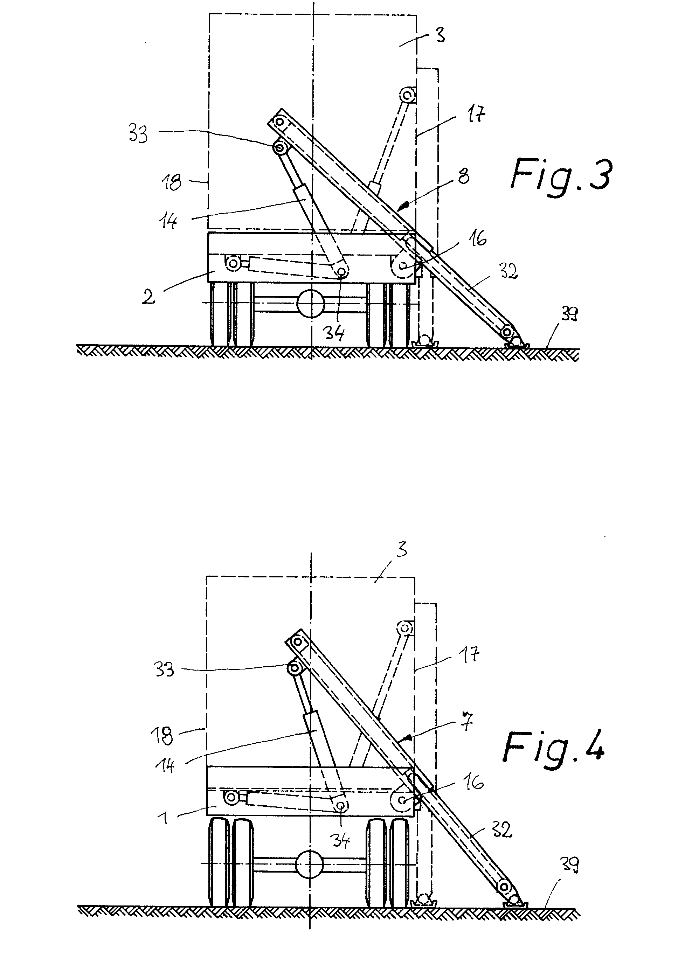

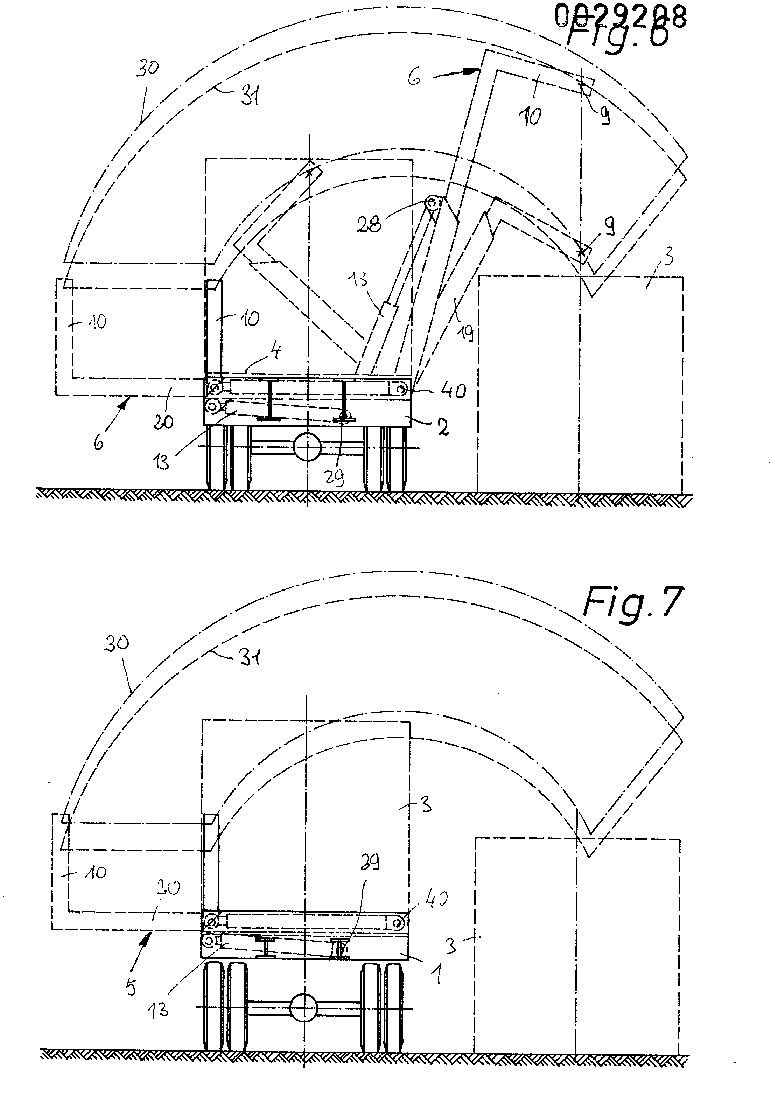

Bei dem in den Fig. 1 und 2 dargestellten Straßenfahrzeug 22 trägt der Sattelauflieger 23, der im übrigen eine an sich bekannte Ausbildung aufweist, vor der Last 3 das vordere Gestell 1 und hinter der Last 3 das hintere Gestell 2. Die Einzelheiten des Aufbaus dieses Gestells gehen unter anderem aus der Darstellung der Fig. 5 hervor. Dort ist das Gestell gezeigt, das am rückwärtigen Ende des Sattelaufliegers 23 befestigt ist. Das Gestell besitzt die beiden U-förmigen Taschen 11 und 12, die im wesentlichen gebildet sind von dem horizontal angeordneten Steg 24 und den sich vom Steg 24 nach oben erstreckenden Schenkeln 25, 26 und 27. Die Teile 24 bis 27 erstrecken sich sämtliche im wesentlichen über die ganze Breite des Fahrzeugs, wie dies beispielsweise aus den Darstellungen der Fig. 3 und 4 erkennbar ist. Die Befestigung des Gestelles 2 am Sattelauflieger 23 erfolgt am Schenkel 25.

Die U-förmige Tasche 11, die jeweils dem Rahmen des Sattelaufliegers bzw. der Lastauflagefläche 4 benachbart ist, nimmt jeweils das Ladegerät auf, wobei das vordere Ladegerät mit dem Bezugszeichen 5 und das hintere Ladegerät mit dem Bezugszeichen 6 bezeichnet ist. Die außenliegende U-förmige Tasche 12 dient der Aufnahme des Stützfußes 7 bzw. 8.

Wie in Stellung der Fig. 5 erkennen läßt, ist das Gestell 2 derart angeordnet, daß es nicht über die Lastauflagefläche 4 nach oben vorsteht. Da der Stützfuß 8 ganz in das Gestell einlegbar ist behindert auch der Stützfuß nicht die Zugänglichkeit der rückwärtigen Seite des Containers, also beispielsweise der Containertür.

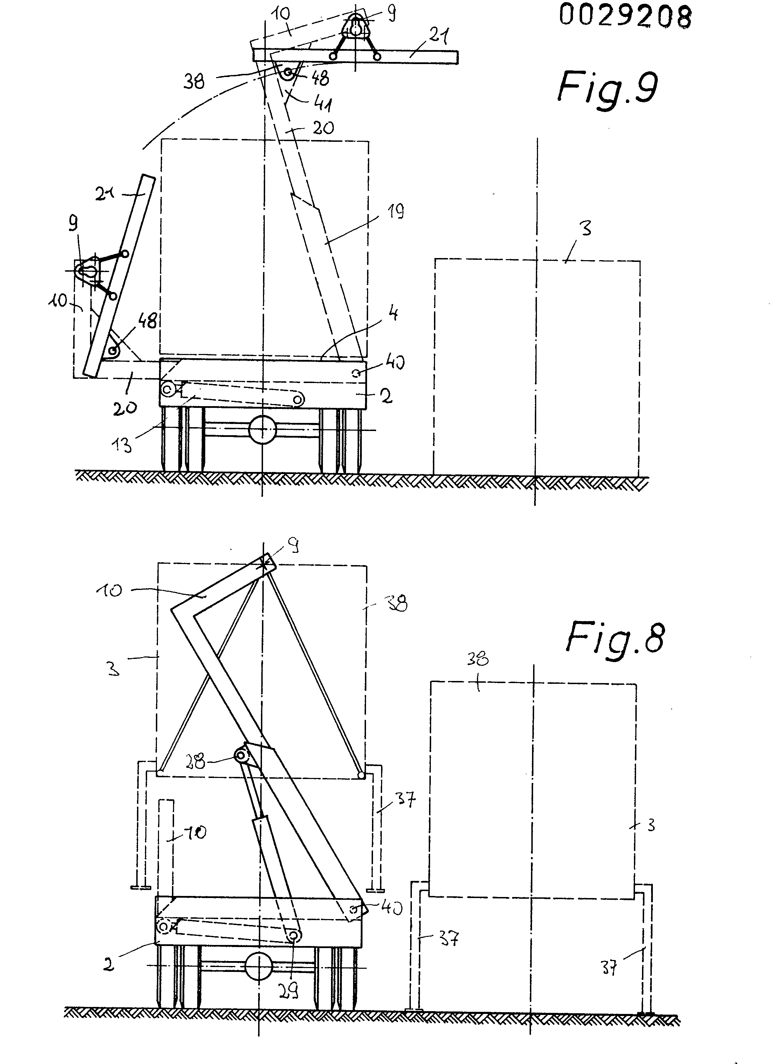

Im gezeigten Ausführugnsbeispiel (vergleiche beispielsweise Fig. 6) besteht das Ladegerät 6 im wesentlichen aus dem Schwenkarm 19, der um das Schwenkgelenk 40 verschwenkbar ist. Für die Verschwenkung des Schwenkarmes 19 ist der Arbeitszylinder 13 vorgesehen, der bei 28 am Schwenkarm angreift und der sich, wie beispielsweise deutlich aus der Variante der Fig. 8 hervorgeht, im Gelenk 29 im Gestell abstützt.

Der Schwenkarm 19 nimmt den Ausleger 20 auf, der einen abgewinkelten Teil 10 mit dem Lastaufhängepunkt 9 besitzt. Im Inneren des Schwenkarmes 19 ist dabei ein nicht näher dargestellter Arbeitszylinder vorgesehen, mit dem es möglich ist, den Ausleger 10 gegenüber dem Schwenkarm 9 zu verschieben.

In der Transportstellung nimmt der Schwenkarm 19 und der Ausleger 10 diejenige Stellung ein, die beispielsweise in der Fig. 6 mit ausgezogenen Linien dargestellt ist, das heißt, der Ausleger liegt im wesentlichen waagrecht in der zugehörigen U-förmigen Tasche 11. Unter dem Ausleger ruht der Arbeitszylinder 13. In dieser Stellung würde ansich der nach oben vorstehende Teil 10 des Auslegers die Zugänglichkeit der Tür an der Last 3 bzw. am Container behindern. Es ist jedoch leicht möglich, durch einen teilweisen Teleskopiervorgang den Teil 10 seitlich zu verschieben, sodaß die Tür zugänglich ist. Dies ist beispielsweise in den Fig. 6, 7 und 9 dargestellt. Dabei genügt bereits eine geringfügige Schiebebewegung etwa in der Breite des Teiles 10.

Bei einer in der Zeichnung nicht näher dargestellten Variante der Erfindung, ist der Ausleger an Stelle des Teiles 10 mit einem zusätzlichen Schwenkarm versehen, der beispielsweise die gleiche Länge besitzen kann, wie der Teil 10 und der durch eine zusätzliche Einrichtung angetrieben und insbesondere so umgeklappt werden kann, daß er in der Transportstellung auf dem Schwenkarm 19 ruht.

Bei dieser Bauweise, die gegebenenfalls in der Höhe ein etwas größeren Platzbedarf besitzt, ist es dennoch möglich, das ganze Gestell 2 sinngemäß niedriger anzuordnen, sodaß auch ohne Bewegung dieses zusätzlichen Schwenkarms die Tür am rückwärtigen Fahrzeugende frei bleibt.

Während das Gestell 2 am rückwärtigen Fahrzeugende derart angeordnet ist, daß es sich mit allen wesentlichen Teilen unter der Lastauflagefläche 4 befindet, ist das Gestell 1 vor der Last um seine gesamte Bauhöhe höher angeordnet und ragt entsprechend über die Lastauflagefläche 4 nach oben vor.

Wie sich insbesondere aus den Darstellungen der Fig. 6 und 7 ergeben, entstehen durch die unterschiedliche Höhenlage der beiden Gestelle 1 und 2 auch unterschiedliche Höhenlagen der jeweiligen Lastangriffspunkte und dementsprechend unterschiedliche Arbeitsbereiche 30 und 31. Der Arbeitsbereich 30 der Darstellungen der Fig. 6 und 7, der mit strichpunktierten Linien angedeutet ist, entspricht dabei dem Arbeitsbereich des Ladegerätes 5 am vorderen Gestell 1, wie dieses in der Fig. 7 gezeigt ist, während der Arbeitsbereich 30, der mit gestrichelten Linien angedeutet ist, dem Ladegerät 6 des hinteren Gestelles 2 zuzuordnen ist.

Der unterschiedlichen Höhenlage der Gestelle 1 bzw. 2 und der Ladegeräte 5 bzw. 6 entspricht eine unterschiedliche Höhenlage der Lagerung der Stützfüße 7 und 8. Der Stützfuß 7 ist dabei vor der Last 3 angeordnet und dem Gestell 1 zugeordnet (Fig. 4), während der Stützfuß 8 im Gestell 2 hinter der Last untergebracht ist, wie dies Fig. 3 darstellt.

Jeder Stützfuß 7 oder 8 wird durch je einen Arbeitszylinder 17 angetrieben, der sich in der eingefahrenen Stellung des Stützfußes jeweils unter dem Stützfuß befindet. Jeder Stützfuß 7 bzw. 8 besitzt einen teleskopierbaren Teil 32, der durch einen nicht näher dargestellten Arbeitszylinder im Inneren des Stützfußes beweglich ist.

Der Stützfuß ist um das Gelenk 16 verschwenkbar, das sich, wie der Vergleich der Darstellungen der Fig. 3 und 4 mit den Darstellungen der Fig. 6 und 7 zeigt, unterhalb des Gelenkes 40 befindet, das dem Schwenkarm 19 dient. Der Angriffspunkt des Arbeitszylinders 14 am Stützfuß ist mit 33 bezeichnet, die Lagerung des Arbeitszylinders am Gestell mit 34.

Es ist leicht möglich, die Anordnung derart zu treffen, daß das Gelenk 34 des Arbeitszylinders 14 bezüglich seiner Anordnung völlig übereinstimmt mit dem Gelenk 29 des Arbeitszylinders 13, sodaß beide Arbeitszylinder beispielsweise auch durch einen gemeinsamen Bolzen 35, der beide Taschen 11 und 12 durchdringt gelagert sein können. Aber schon dann, wenn die Gelenke 29 bzw. 34 in räumlicher Nachbarschaft angeordnet sind, ergeben sich günstige Verhältnisse bezüglich der Weiterleitung der auftretenden Kräfte.

Ähnliches gilt für das Gelenk 16 des Stützfußes und das Gelenk 40 des Auslegers. Zwar befinden sich diese Gelenke beim gezeigten Ausführungsbeispiel in unterschiedlicher Höhenlage, jedoch dennoch so zueinander benachbart, daß die Kräfte gut übergeleitet werden können.

Die Fig. 3 und 4 lassen ferner erkennen, daß mittels der Stützfüße 7 bzw. 8 günstige Auflagepunkte auf dem Erdboden 39 gefunden werden können und zwar je in Anpassung an die örtlichen Verhältnisse. Der Stützfuß kann völlig senkrecht gestellt werden und es ist auch möglich bei entsprechender Schräglage einen vergleichsweise weit außen liegenden Stützpunkt auf der rechten Fahrzeugseite 17 zu finden. Auch einen Abstützpunkt auf einer Rampe oder dergleichen kann mittels der Stützfußkonstruktion erreicht werden.

Die Fig. 8 zeigt, wie beim Ladevorgang einer Last, die als Wechselaufbau 38 ausgebildet ist und die zusätzliche Stützbeine 37 trägt, mittels der erfindungsgemäßen Anordnung

0029208

eine ausreichende Hubhöhe erreichbar ist, um beispielsweise der Wechselaufbau mit ausgefahrenen Stützbeinen 37 über die Lastauflagefläche des Fahrzeuges hinwegzuführen.

Fig. 9 zeigt eine erfindungsgemäße Variante. Der Spreader 21 kann mittels der Lasche 36 und eines Bolzens 48 an einer Lasche 41 des Auslegers 20 befestigt werden, sodaß, wenn gewünscht, der Spreader 21 in eine Lage gebracht werden kann, in der die Last 3 gut zugänglich ist.

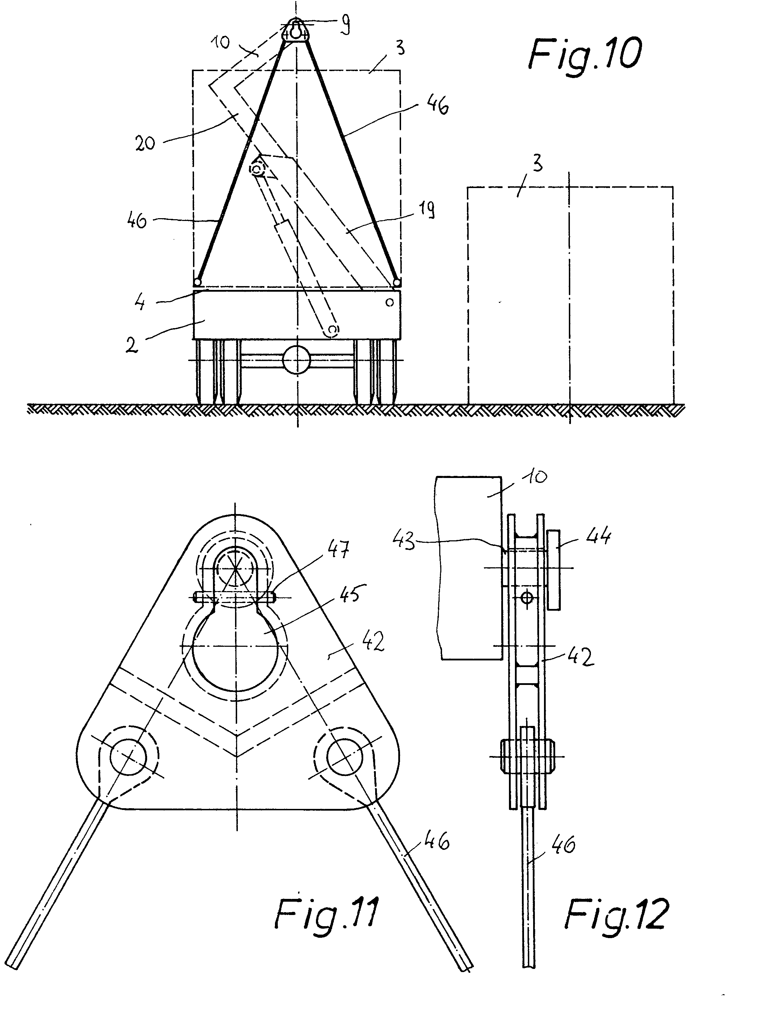

Die Fig. 10 zeigt die Verbindung der Last 3 mit dem Lastaufhängepunkt 9 mittels eines Gehänges, das aus der Platte 42 besteht, die am Bolzen 43 aufhängbar ist. Der Bolzenkopf 44 kann durch die Öffnung 45 hindurchgeführt und in der Betriebsstellung durch einen Querbolzen 47 gesichert werden. Die Ketten oder Seile 46 verbinden die Platte 42 mit den Befestigungspunkten an der Last 3.

Bei dem Straßentransportfahrzeug gemäß der Erfindung ergibt sich weiter, daß auch dann, wenn an den Fahrzeugseiten 17 oder 18 Türen vorgesehen sind, diese immer zugänglich sind bzw. es leicht möglich ist, durch entsprechende Stellung des Ladegerätes diese zugänglich zu machen.

Patentanwalt

Dipl.-Ing. **HELMUT PFISTER**

Postscheckkonto München Nr. 1343 39-805
Bankkonto: Bayerische Vereinsbank Memmingen

D-894 MEMMINGEN/BAYERN
Buxacherstraße 9
Telefon (08331) 31 83

0029208

21/1

1 2. Nov. 1980

Patentansprüche

1. Straßentransportfahrzeug, insbesondere Sattelauflieger zum Transport von Containern, Wechselaufbauten oder dergleichen mit einer Ladeeinrichtung zum Auf- und Abladen der Last, bestehend aus je einem vor und hinter der Last am Fahrzeug gelagerten Ladegerät mit einem verschwenkbaren Arm, an dem die Last aufhängbar ist und einem Stützfuß zur Abstützung am Erdboden während des Ladevorgangs, wobei das Ladegerät und der Stützfuß an einem gemeinsamen Gestell gelagert sind, dadurch gekennzeichnet, daß das eine Gestell (1) am vorderen Ende der Last (3) im wesentlichen oberhalb der Lastauflagefläche (4) und das andere Gestell (2) am hinteren Ende der Last im wesentlichen unter der Lastauflagefläche angeordnet ist und daß sowohl das Ladegerät (5, 6) als auch der Stützfuß (7, 8) nach oben und seitlich vom Gestell (1, 2) wegbewegbar sind.

- 2 -

- 2 -

0029208

2. Fahrzeug nach Anspruch 1, dadurch gekennzeichnet, daß die unterschiedliche Höhenlage der beiden Ladegeräte (5, 6) durch unterschiedlich lange Verbindungsmittel, zum Beispiel Gehänge zwischen der Last (3) und dem Lastaufhängepunkt (9) am Ladegerät ausgeglichen sind.

3. Fahrzeug nach Anspruch 1 oder 2, dadurch gekennzeichnet, daß das Gestell (1, 2) mindestens die wesentlichen Teile des Ladegerätes (5, 6) und des Stützfußes (7, 8) umschließt.

4. Fahrzeug nach einem oder mehreren der vorhergehenden Ansprüche, dadurch gekennzeichnet, daß nach oben vorstehende Teile (10) des Ladegerätes oder des Stützfußes seitlich aus dem Bereich des Lastumrisses wegbewegbar sind.

5. Fahrzeug nach einem oder mehreren der vorhergehenden Ansprüche, dadurch gekennzeichnet, daß das Gestell (1, 2) nach oben offene U-förmige Aufnahmetaschen (11, 12) für das Ladegerät und den Stützfuß aufweist.

6. Fahrzeug nach einem oder mehreren der vorhergehenden Ansprüche, dadurch gekennzeichnet, daß in der Transportstellung das Ladegerät und der Stützfuß jeweils oberhalb des zugehörigen Arbeitszylinders (13, 14) angeordnet sind.

7. Fahrzeug nach einem oder mehreren der vorhergehenden Ansprüche, dadurch gekennzeichnet, daß das Ladegerät (5, 6) und der Stützfuß (7, 8) um ein Schwenkgelenk (15, 16) an der gleichen Fahrzeugseite (17) bewegbar sind und der Arbeitszylinder (13, 14) jeweils an derjenigen Stelle am Ladegerät bzw. am Stützfuß angreift, die in der Transportstellung der gegenüberliegenden Fahrzeugseite (18) benachbart ist.

- 3 -

8. Fahrzeug nach einem oder merhreren der vorhergehenden Ansprüche, dadurch gekennzeichnet, daß der Schwenkarm (19) des Ladegeräts (5, 6) einen teleskopierbaren Ausleger (20) aufweist und der Lastaufhägepunkt (9) an einem rechtwinklig abstehenden Teil (10) des Auslegers angeordnet ist.

9. Fahrzeug nach einem oder mehreren der vorhergehenden Ansprüche, dadurch gekennzeichnet, daß bei Verwendung eines Spreaders (21) dieser am Ausleger (20) fixierbar ist derart, daß der Spraeder ohne Last mit dem Schwenkarm (19) verschwenkbar ist.

Der Patentanwalt

0029208

Fig.1

Fig.2

Fig.5

*Fig.3*

*Fig.4*

0029208

Fig.6

Fig.7

0029208

*Fig.9*

*Fig.8*

0029208

Fig.10

Fig.11

Fig.12

**Europäisches Patentamt**

**EUROPÄISCHER RECHERCHENBERICHT**

0029208

Nummer der Anmeldung

EP 80 10 6971

| Kategorie | Kennzeichnung des Dokuments mit Angabe, soweit erforderlich, der maßgeblichen Teile | betrifft Anspruch |
|---|---|---|
| A | DE - B - 1 630 599 (KASPAR KLAUS) <br> * Das ganze Dokument * | 1 |
| A | DE - A - 1 921 060 (KASPAR KLAUS) <br> * Das ganze Dokument * | 1 |
| A | FR - A - 2 182 803 (CLARK) <br> * Seite 6, Zeile 29 bis Seite 7, Zeile 9; Figuren 9,10 * <br> & DE - A - 2 258 806 (CLARK) | 1,5 |
| A | US - A - 3 958 702 (HAND) <br> * Das ganze Dokument * | 1 |

**EINSCHLÄGIGE DOKUMENTE**

**KLASSIFIKATION DER ANMELDUNG (Int. Cl.³)**

B 60 P 1/64

**RECHERCHIERTE SACHGEBIETE (Int. Cl.³)**

B 60 P
B 60 S

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-02-1981 | SCHMITTER |

EPA form 1503.1   06.78